Europäisches Patentamt

European Patent Office

Office européen des brevets

(11) Veröffentlichungsnummer: **0 463 197 A1**

## EUROPÄISCHE PATENTANMELDUNG

(21) Anmeldenummer: **90111984.2**

(22) Anmeldetag: **25.06.90**

(51) Int. Cl.5: **F16L 37/28**

(43) Veröffentlichungstag der Anmeldung:
**02.01.92 Patentblatt 92/01**

(84) Benannte Vertragsstaaten:
**AT BE CH DK ES FR GB GR IT LI LU NL SE**

(71) Anmelder: **ROBERT VON KEITZ KG**
**Am Grenzweg Postfach 376**
**W-6250 Limburg(DE)**

(72) Erfinder: **von Keitz, Robert**
**Parkstrasse 33**
**W-6250 Limburg(DE)**

(74) Vertreter: **Wolf, Günter, Dipl.-Ing.**
**Postfach 70 02 45 An der Mainbrücke 16**
**W-6450 Hanau 7(DE)**

(54) **Trennbares Doppelventil.**

(57) Das trennbares Doppelventil, besteht aus zwei in Öffnungsstellung molchbaren Ventilen(I,II) mit Stellelementen (1,1') zur Betätigung der in den mit Kupplungselementen verbindbaren Ventilgehäusen(2,2') angeordneten Schließelementen(3,3'), wobei der innere, sich vom einen zum anderen Schließelement-(3,3') erstreckende Verbindungsbereich (13) beider Ventile(I,II) den gleichen Querschnitt wie die molchbaren Durchgangsöffnungen(14) der Schließelemente(3,3') aufweist und aus ineinander steckbaren und gegeneinander abgedichteten Elementen gebildet ist.

Das Doppelventil ist derart ausgebildet, daß an den untereinander formidentischen Ventilen(I,II) zwischen den die Leitungsanschlußelemente(5) bildenden, ringzylindrischen Anschlußhälsen der beiden Ventile Zwischenringe (A,B) angeordnet sind, wobei der eine Ring (A) eine konische oder konisch angefaste Ausnehmung(6) aufweist und der andere Ring-(B) mit einem in die Ausnehmung(6) passenden Ringfortsatz(7) versehen ist, und daß der Ring(A) außen mindestens zwei Einschubnuten(9) mit sich dazu quer anschließenden Verrastungsschlitzen(10) und der andere Ring(B) einen den anderen Ring(A) übergreifenden Ringfortsatz(11) aufweist, an dem in die Nuten(9) und Verrastungsschlitze(10) passende Verrastungsfortsätze(12) angeordnet sind.

FIG.4

Die Erfindung betrifft ein trennbares bzw. kuppelbares Doppelventil gemäß Oberbegriff des Hauptanspruches.

Derartige, molchbare Doppelventile bzw. Ventilkupplungen sind bspw. nach der DE-A- 11 31 472 bekannt und auch nach der DE-A-10 54 792. Um die beiden Ventilteile der Kugelhahnkupplung nach der DE-A-11 31 472 miteinander kuppeln zu können, sind die beiden Ventilteile zwar zueinander entsprechend angepaßt, welche Anpassung aber zwangsläufig zur Nichtidentität der beiden Ventilteile führt, d.h., identische Ventile können für dieses bekannte Doppelventil nicht verwendet werden, abgesehen davon, daß dies auch für die an diesem Ventil vorgesehenen Kupplungselemente gilt. Auch bei der Kugelhahnkupplung nach der DE-A-10 54 792 ist eine solche Identität der beiden Ventilteile nicht gegeben, wobei sogar Formabweichungen an den Ventilverschlußelementen vorhanden sind, da die beiden Ventilgehäuse sehr dicht zusammengefügt werden, und zwar mit besonderen, zwar angepaßten aber unterschiedlich und an den Gehäusen unmittelbar selbst angeformten Kupplungselementen.

Ausgehend vom Doppelventil nach der DE-A-11 31 472 liegt der Erfindung die Aufgabe zugrunde, ein solches Doppelventil dahingehend zu verbessern, daß dafür identische Ventile verwendbar sein und die notwendigen Kupplungselemente für eine Schnellverbindung bzw. Schnellentpupplung der beiden Ventile unabhängig von diesen, d.h., ohne notwendige Direktanpassung an die Ventilgehäuse am Doppelventil vorhanden sein sollen.

Diese Aufgabe ist mit einem trennbaren Doppelventil nach der Erfindung durch die im Kennzeichen des Hauptanspruches angeführten Merkmale gelöst. Vorteilhafte Weiterbildungen ergeben sich nach den Unteransprüchen.

Bei dieser erfindungsgemäßen Ausbildung der beiden miteinander zu koppelnden Ventile, die auf ihrer anderen Anschlußseite entweder direkt an einem Behälter und an einem daran anzuschließenden Leitungsstück sitzen oder an den Enden zweier miteinander zu verbindenden Leitungsstücke, sind die gemeinsamen, für eine Zusammenkopplung vorgesehenen Anschlußseiten der beiden Ventile derart ausgebildet, daß diese, ohne verflanscht oder verschraubt werden zu müssen, problemlos miteinander und dicht verkoppelt oder entkoppelt werden können, wobei gleichzeitig aber dafür gesorgt ist, daß im zusammengekoppelten Zustand auch der ganze Verbindungsbereich im Querschnitt dem freien Durchgangsquerschnitt der beiden Schließelemente in den Ventilgehäusen entspricht, so daß dieses Doppelventil in öffnungsstellung ohne weiteres von einem entsprechend querschnittsangepaßten Reinigungselement durchfahren werden kann.

Wesentlich ist dabei, daß das die Ausnehmung und die Nuten enthaltende Teil des einen Ventilgehäuses und das den Ringfortsatz aufweisende Teil des anderen Gehäuses als separate, an die Anschlußelemente der Gehäuse abgedichtet anschließbare Teile ausgebildet sind. Dadurch können nämlich ohne weiteres handelsübliche molchbare Ventile benutzt werden, ohne daß für den vorgesehenen Zweck wesentliches an diesen Ventilen geändert werden muß. Diesbezüglich noch einen Schritt weitergehend, wird auch das den übergreifenden Ringfortsatz aufweisende Teil des Ventils ebenfalls als separates, auf dem Ventilgehäuse angeordnetes Teil ausgebildet. Diese separaten Teile sind dabei gleichzeitig für die konstruktive Unterbringung der Kupplungselemente ausgenutzt, so daß auch davon die eigentlichen Ventile unberührt bleiben.

Da beim Zusammenschluß zweier molchbarer Ventile keine funktionelle Verbindung zwischen den Schließteilen beider Ventile besteht, andererseits in der Mehrzahl der Fälle eine solche funktionelle Verbindung aber wünschenswert ist, die sicherstellt, daß insbesondere bei der Entkopplung beider Ventile weder aus dem einen noch aus dem anderen Flüssigkeit austreten kann, besteht eine vorteilhafte Weiterbildung des Doppelventils darin, daß der übergreifende Ringfortsatz drehbar, aber axial fixiert auf dem Ventilgehäuse gelagert ist, und die Stellhebel beider Ventile mit miteinander im Eingriff stehenden Stellgliedern versehen sind, die mit dem drehbaren Ringfortsatz in Wirkverbindung stehen. Bei dieser vorteilhaften Weiterbildung ist die Voraussetzung dahingehend geschaffen, daß der Kopplungs- bzw. Entkopplungsvorgang der beiden Ventile gleichzeitig mit der Öffnung bzw. dem Verschluß beider Ventile verbunden ist, was im einzelnen noch näher erläutert wird. Die Stellglieder sind dabei zweckmäßig in Form von stirnverzahnten 90$^\circ$-Stellsegmenten ausgebildet, wobei die Stirnverzahnung des einen Stellgliedes höher ausgebildet ist als die des anderen, und wobei der drehbare Ringfortsatz mit einer Umfangsverzahnung versehen ist, die mit dem Teil der höheren Verzahnung im Eingriff steht, der sich unterhalb des Eingriffes der Stirnverzahnung des anderen Stellgliedes befindet.

Diese Art der Zwangskopplung der Stellglieder untereinander einerseits und andererseits eines der Stellglieder mit dem Ringfortsatz kann auch dadurch verwirklicht werden, daß unterhalb der Stirnverzahnung des einen Stellgliedes eine Kegelverzahnung angeordnet und der drehbare Ringfortsatz mit einer entsprechenden, mit der Kegelverzahnung des Stellgliedes in Eingriff stehenden Kegelverzahnung versehen ist.

Eine diesbezüglich weitere andere Ausführungsform besteht darin, daß das eine und/oder andere Stellglied mit zwei Schnurzügen mit dem drehbaren Ringfortsatz derart verbunden ist, daß der eine bei Drehung der Stellglieder den Ringfortsatz in der einen Richtung und der andere den Ringfortsatz in entgegengesetzter Richtung zieht. Die Zugwirkung der beiden Schnurzüge erfolgt dabei selbstverständlich nicht gleichzeitig, sondern beim Schließen der Ventile wird der eine Schnurzug und beim Öffnen der Ventile der andere Schnurzug wirksam.

Vorteilhafte Weiterbildungen für diese drei Varianten und auch die prinzipielle Ausführungsform bestehen darin, daß die Verrastungsfortsätze mit darauf drehbar angeordneten Gleitringen versehen sind, und daß bezogen auf den Umfang des Anschlußbereiches am einen Ventil drei um 120° versetzte Nuten und am anderen Ventil drei entsprechend versetzte Verrastungsfortsätze angeordnet sind.

Für die Ausführungsform, bei der der Ringfortsatz drehbar dem einen Ventilgehäuse zugeordnet ist, ist vorgesehen, daß der Ringfortsatz mit mindestens drei in um 120° versetzten Führungskanälen angeordneten Kugeln und das Gehäuse des betreffenden Ventiles mit einer umlaufenden, im Querschnitt halbkreisförmigen Verrastungsnut versehen ist. Damit ist gleichzeitig vorteilhaft die notwendige axiale Fixierung des Ringfortsatzes als auch dessen Drehbarkeit und ferner auch dessen leichte Demontierbarkeit gewährleistet.

Stellsegmente, ggf. sogar motorisch antreibbar, sind zwar bekannt, diese dienen aber nur dazu, das zugehörige Schließelement des Ventiles zu betätigen, aber nicht um die Schließelemente zweier zusammengekoppelter Ventile dieser Art gemeinsam zu betätigen und zudem gleichzeitig damit die Kopplungselemente.

Für den vorliegenden Fall und zwar hinsichtlich der bevorzugten Ausführungsform der Zwangskopplung der Betätigungsvorgänge für die Schließelemente einerseits und andererseits der Kopplungselemente ist es wesentlich, daß die Verrastungsnuten und die Verrastungsfortsätze derart angeordnet und einander zugeordnet sind, daß der Kopplungsschluß der beiden Ventile schon gewährleistet sein muß, wenn sich die Schließelemente der beiden Ventile zu öffnen beginnen, bzw. die beiden Ventile erst getrennt werden können, wenn die Schließelemente ihre Schließstellung erreicht haben.

Das erfindungsgemaße Doppelventil wird nachfolgend anhand der zeichnerischen Darstellung von Ausführungsbeispielen näher erläutert.

Es zeigt schematisch

Fig. 1   einen Längsschnitt durch das Doppelventil in ihrer einfachsten Ausführungsform;

Fig. 2   eine Draufsicht auf den äußeren Anschlußbereich des einen Ventiles;

Fig. 3   einen Längsschnitt durch das Doppelventil in bevorzugter Ausführungsform;

Fig. 4   im Schnitt und stark vergrößert den mittleren Bereich der Fig. 3;

Fig. 5   eine Draufsicht auf die Stellglieder der beiden Ventile;

Fig. 6   sehr stark schematisiert eine Schnittansicht längs Linie VI-VI in Fig. 3 und

Fig. 7   eine Schnittdarstellung der beiden Ventile im Sinne der Fig. 1 in anderer Ausführungsform.

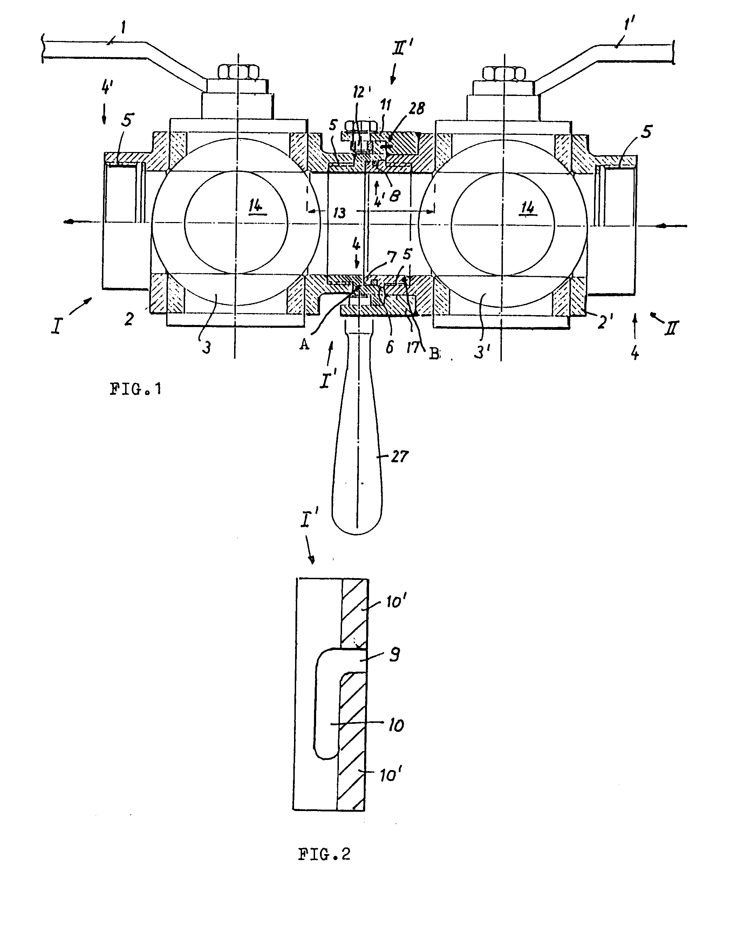

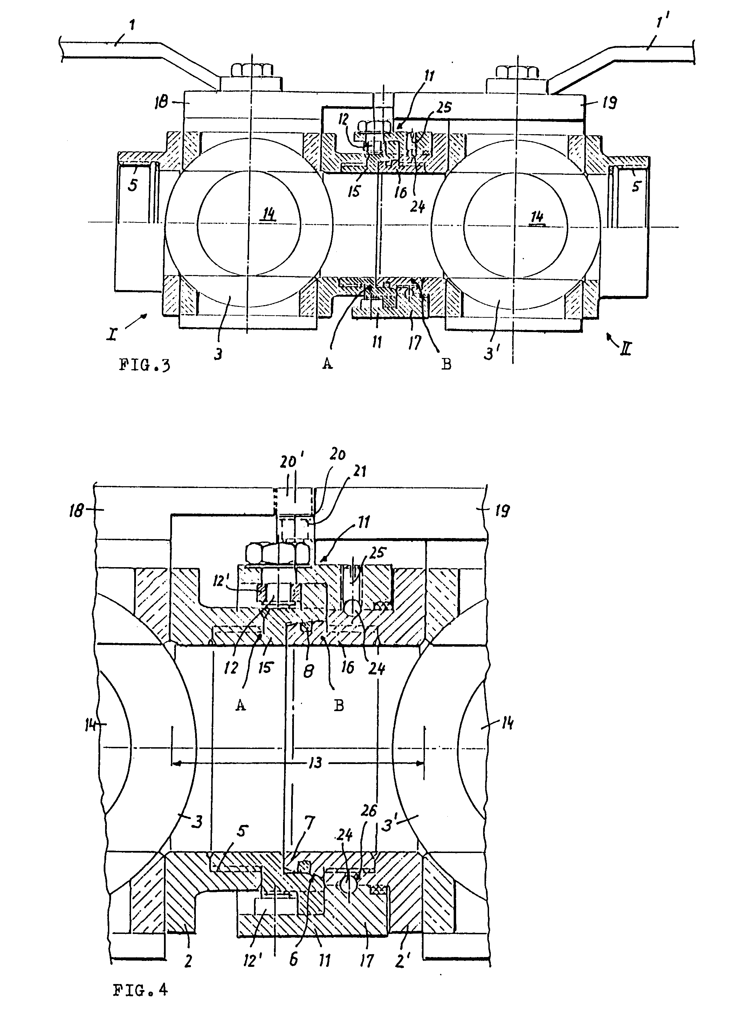

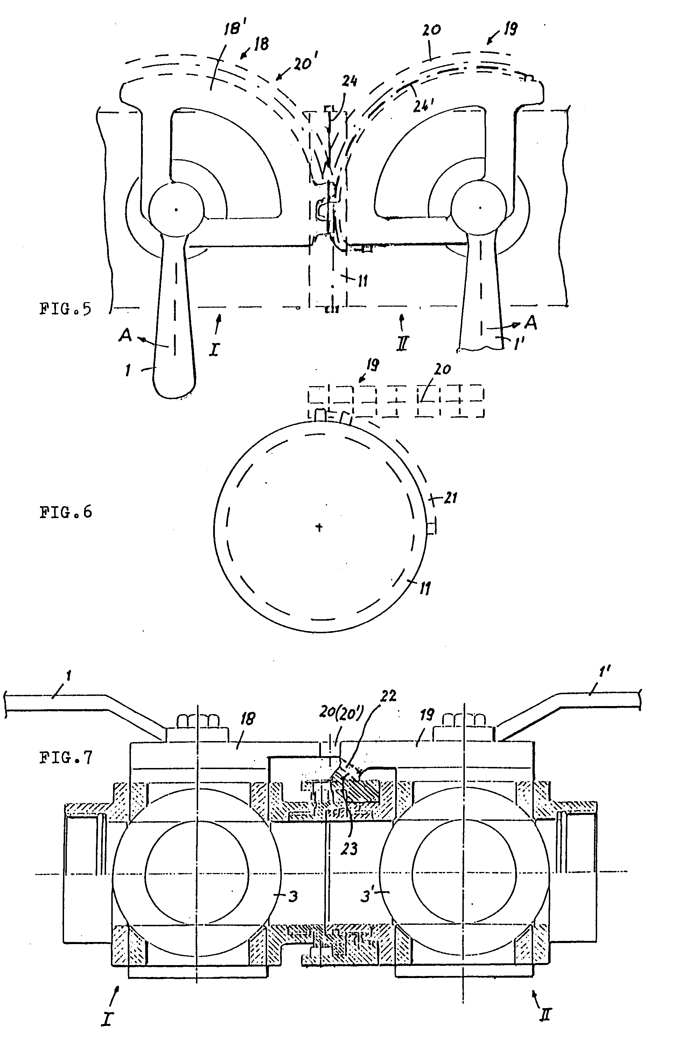

Wie aus Fig. 1 ersichtlich, besteht das trennbare Doppelventil aus zwei bezüglich ihrer Grundelemente identischen, in Öffnungsstellung molchbaren Ventilen I, II mit Stellhebeln 1, 1' zur Betätigung der in den Ventilgehäusen 2, 2' angeordneten Ventil-Schließelementen 3, 3', wobei die Zu- und Abströmseiten 4, 4' der Gehäuse 2, 2' mit Leitungsanschlußelementen 5 versehen sind, die in diesem Falle aus Innengewinden 5 gebildet sind. An der rechten Zuströmseite 4 des Ventiles II ist eine hier nicht dargestellte Schlauchleitung angeschlossen, während die Abströmseite 4' des anderen Ventiles I ebenfalls das Ende einer hier nicht dargestellten Schlauchleitung darstellen kann oder dieses Ventil I bildet das Anschlußteil eines Behälters. Wesentlich ist nun, daß die eine Anschlußseite des einen Ventiles I mit einer konischen Ausnehmung 6 und die eine Anschlußseite des anderen Ventiles II mit einem in die Ausnehmung 6 passenden Ringfortsatz 7 versehen und zwischen Ausnehmung 6 und Ringfortsatz 7 mindestens eine Ringdichtung 8 angeordnet ist. An der Anschlußseite I' des einen Ventilgehäuses 2 sind außen mindestens zwei axiale Einschubnuten 9 vorgesehen, an die sich, wie dargestellt und quer dazu verlaufend Verrastungsnuten 10 (Fig. 2) anschließen. An der Anschlußseite II' des anderen Ventilgehäuses 2' ist ein den mit den Nuten 9, 10 versehenen Bereich des anderen Ventiles I übergreifender Ringfortsatz 11 angeordnet, an dem in die Nuten 9, 10 des anderen Ventiles I passende Verrastungsfortsätze 12 angeordnet sind, auf denen Gleitringe 12' sitzen. Die Anordnung und Gestaltung der Nuten 9, 10 und der Verrastungsfortsätze 12 ist dabei so getroffen, daß sich die beiden Ventile bei Erreichen der Verrastungsendstellung im Sinne der Fig. 1 gegenüberstehen. Das Ausführungsbeispiel gemäß Fig. 1 berücksichtigt schon die bevorzugte Ausführungsform, nämlich derart, daß das die Ausnehmung 6 und die Nuten 9, 10 enthaltende Teil des einen Ventilgehäuses 2 und das den Ringfortsatz 7 aufweisende Teil des anderen Ventilgehäuses 2' als separate, an die Anschlußelemente 5 der Gehäuse 2, 2' abgedichtet anschließbaren Teile 15, 16 ausgebildet sind. Diese Ausbildung läßt nämlich die Verwendung handelsüblicher, molchbarer Ventile zu, ohne an diesen besondere konstruktive Eingriffe vornehmen zu müssen. In diesem Falle bedarf es nur der Anbringung der Fortsätze 11 für die Halterung der Verrastungsfortsätze 12. In Rücksicht auf vorteilhafte Weiterbildungsformen (Fig. 3-7), für die dies Voraussetzung ist, ist auch der übergreifende Ringfortsatz des Ventiles II ebenfalls als separates, auf dem Ventilgehäuse 2' angeordnetes Teil 17 ausgebildet. Sofern eine derartige Ausführungsform nicht mit einer Zwangskopplung zwischen Betätigung der Schließelemente und der Kopplungselemente vorgesehen ist, bedarf der Ringfortsatz 11 natürlich einer drehfesten und axialen Fixierung am Gehäuse 2'. Für die vorgesehene Zwangskopplung ist der übergreifende Ringfortsatz 11 drehbar, aber axial fixiert auf dem Ventilgehäuse 2' gelagert, und die Stellhebel 1, 1' beider Ventile I, II sind mit miteinander im Eingriff stehenden Stellgliedern 18, 19 versehen, die mit dem drehbaren Ringfortsatz 11 in Wirkverbindung stehen. Gemäß Fig. 5 sind die Stellglieder 18, 19 in Form von stirnverzahnten 90°-Stellsegmenten 18', 19' ausgebildet und zwar zwecks Herstellung der angestrebten Wirkverbindung derart, daß die Stirnverzahnung 20 des einen Stellgliedes 19 höher ausgebildet ist als die des anderen, und daß der drehbare Ringfortsatz mit einer Umfangsverzahnung (Fig. 6) 21 versehen ist. Diese Umfangsverzahnung 21 steht mit dem Teil der höheren Verzahnung 20 im Eingriff, der sich unterhalb des Eingriffes der Stirnverzahnung 20' des anderen Stellgliedes 18' befindet. Das Stellglied 19 steht also nur mit der oberen Hälfte seiner Stirnverzahnung 20 mit der etwa nur halb so hohen Stirnverzahnung 20' des anderen Stellgliedes 18 im unmittelbaren Einriff, während etwa die untere Hälfte der Stirnverzahnung 20 des Stellgliedes 19 gleichzeitig mit der Umfangsverzahnung 21 des Ringfortsatzes 11 im Eingriff steht, wobei natürlich die Umfangsverzahnung 21 des Ringfortsatzes 11 eine entsprechend angepaßte Verzahnungsgestaltung aufweisen muß, da sich diese Verzahnung in einer anderen Ebene bewegt. Die Stellung der Stellhebel 1, 1' gemäß Fig. 5 der beiden Ventile entspricht dabei der Schließstellung, bei der auch die beiden Ventile I, II zusammengefügt werden können, d.h., hierbei steht jeder Nut 9 des Ventiles I ein Verrastungselement 12 gegenüber, die Stirnverzahnungen 20, 20' können ineinandergefügt werden, und auch die Umfangsverzahnung 21 des drehbaren Ringfortsatzes 11 kann in eine entsprechende Zahnlücke der höheren Verzahnung 20 am Stellelement 19 eingreifen. Um die Öffnung und dichte Zusammenkopplung beider Ventile I, II zu bewirken, sind lediglich die Stellhebel 1, 1' in Pfeilrichtung A zu bewegen, wobei sofort die bereits am Ende der Nut 9 befindlichen Verrastungsfortsätze 12 in die Nut 10 gelangen, und damit die sichere und dichte Verbindung beider Ventile gewährleisten. Bei Erreichen der Öffnungsstellung beider Schließelemente 14 (siehe Fig. 3) sind die Stellelemente 18, 19 ebenfalls in Pfeilrichtung A um 90° verschwenkt, und die Verrastungsfortsätze 12 haben die Enden der Nuten 10 erreicht. Die Ausbildung der Nuten 10 im Anschluß an die sich in axialer Richtung erstreckenden kurzen Nuten 9, wie in Fig. 2 dargestellt, ist nicht, wie ohne weiteres vorstellbar, zwingend, denn im Grunde genügt es dafür auch, am Teil 15 einfach umlaufende Stege 10' vorzusehen, die bspw. drei um 120° versetzte Nuten 9 aufweisen, wie dies schraffiert in Fig. 2 ebenfalls angedeutet ist.

Anstelle der Umfangsverzahnung 21 am Ringfortsatz 11 kann dieser auch gemäß Fig. 7 mit einer Kegelverzahnung 23 versehen sein, wobei am Stellglied 19 unterhalb von dessen normaler Stirnverzahnung 20 eine entsprechende Kegelverzahnung 22 vorgesehen ist. Der Stelleffekt ist damit der gleiche wie vorbeschrieben.

Bei der Ausführungsform gemäß Fig. 5, die insbesondere der Verdeutlichung der Stellglieder 18, 19 in ihrer besonderen Ausführungsform dient, ist auf eine Verzahnungskopplung des Ringfortsatzes mit den Verzahnungen der Stellglieder verzichtet, denn hierbei ist das Stellglied 19 mit zwei Schnurzügen 24, 24' mit dem drehbaren Ringfortsatz 11 derart verbunden, daß der eine Schnurzug 24 bei Drehung in Richtung des Pfeiles A den Ringfortsatz in einer Richtung, während der andere Schnurzug 24' bei Drehung entgegen der Pfeilrichtung A den Ringfortsatz 11 in entgegengesetzter Richtung mitzieht. Dafür müssen natürlich die Schnurzüge 24, 24', wie aus Fig. 5 ersichtlich, an unterschiedlichen Stellen sowohl am Stellglied 19 als auch am Ringfortsatz 11 in geeigneter Weise befestigt sein.

Bei einer einfachsten Ausführungsform gemäß Fig. 1 ist zweckmäßig und wie dargestellt das Gehäuse 2'bzw. der Ringfortsatz 11 mit einem Stellgriff 27 versehen, um das Ankoppeln zu erleichtern, wenn dieses Ventil II das Ende einer anzuschließenden Schlauchleitung bildet. Da Schlauchleitungen beachtliche Rückstellkräfte bei Verdrehung entwickeln können, ist vorteilhaft an mindestens einer Stelle eine geeignete und willkürlich betätigbare Sperre 28 vorgesehen.

## Patentansprüche

1.  Trennbares Doppelventil, bestehend aus zwei in Öffnungsstellung molchbaren Ventilen(I,II) mit Stellelementen (1,1') zur Betätigung der in den mit Kupplungselementen verbindbaren Ventilgehäusen(2,2') angeordneten Schließelementen(3,3'), wobei der innere, sich vom einen zum anderen Schließelement(3,3') erstreckende Verbindungsbereich (13) beider Ventile(I,II) den gleichen Querschnitt wie die molchbaren Durchgangsöffnungen(14) der Schließelemente(3,3') aufweist und aus ineinander steckbaren und gegeneinander abgedichteten Elementen gebildet ist, **dadurch gekennzeichnet**, daß an den untereinander formidentischen Ventilen(I,II) zwischen den die Leitungsanschlußelemente(5) bildenden, ringzylindrischen Anschlußhälsen der beiden Ventile Zwischenringe (A,B) angeordnet sind, wobei der eine Ring (A) eine konische oder konisch angefaste Ausnehmung(6) aufweist und der andere Ring(B) mit einem in die Ausnehmung(6) passenden Ringfortsatz(7) versehen ist, und daß der Ring(A) außen mindestens zwei Einschubnuten(9) mit sich dazu quer anschließenden Verrastungsschlitzen(10) und der andere Ring(B) einen den anderen Ring(A) übergreifenden Ringfortsatz(11) aufweist, an dem in die Nuten(9) und Verrastungsschlitze(10) passende Verrastungsfortsätze(12) angeordnet sind.

2. Doppelventil nach Anspruch 1, **dadurch gekennzeichnet**, daß der den übergreifenden Ringfortsatz(11) aufweisende Teil des Ringes(B) ebenfalls als separates, außen auf den Anschlußhals angeordnetes Ringteil(17) ausgebildet ist.

3. Doppelventil nach Anspruch 1 oder 2 **dadurch gekennzeichnet**, daß der übergreifende Ringfortsatz (11) drehbar, aber axial fixiert auf dem Ventilgehäuse (2') gelagert ist und die Stellhebel (1, 1') beider Ventile (I, II) mit miteinander im Eingriff stehenden Stellgliedern (18, 19) versehen sind, die mit dem drehbaren Ringfortsatz (11) in Wirkverbindung stehen.

4. Doppelventil nach Anspruch 3, **dadurch gekennzeichnet**, daß die Stellglieder (18, 19) in Form von stirnverzahnten 90$^\circ$-Stellsegmenten (18', 19') ausgebildet sind.

5. Doppelventil nach Anspruch 3 oder 4, **dadurch gekennzeichnet**, daß die Stirnverzahnung (20) des einen Stellgliedes (19) höher ausgebildet ist als die des anderen und daß der drehbare Ringfortsatz (11) mit einer Umfangsverzahnung (21) versehen ist, die mit dem Teil der höheren Verzahnung (20) im Eingriff steht, der sich unterhalb des Eingriffes der Stirnverzahnung (20') des anderen Stellgliedes (18) befindet.

6. Doppelventil nach Anspruch 3 oder 4, **dadurch gekennzeichnet**, daß unterhalb der Stirnverzahnung (20) des einen Stellglieds (19) eine Kegelverzahnung (22) angeordnet und der drehbare Ringfortsatz (11) mit einer entsprechenden, mit der Kegelverzahnung (22) des Stellgliedes (19) im Eingriff stehenden Kegelverzahnung (23) versehen ist.

7. Doppelventil nach Anspruch 3 oder 4, **dadurch gekennzeichnet**, daß das eine und/oder andere Stellglied (18, 19) mit zwei Schnurzügen (24, 24') mit dem drehbaren Ringfortsatz (11) derart verbunden ist, daß der eine bei Drehung der Stellglieder (18, 19) der Ringfortsatz (11) in der einen Richtung und der andere den Ringfortsatz (11) in entgegengesetzter Richtung zieht.

8. Doppelventil nach einem der Ansprüche 3 bis 7, **dadurch gekennzeichnet**, daß der drehbar auf dem Gehäuse (2') gelagerte Ringfortsatz (11) mit mindestens drei in um 120$^\circ$ versetzten Führungskanälen (25) angeordneten Kugeln (24) und das Gehäuse (2') mit einer umlaufenden, im Querschnitt halbkreisförmigen Verrastungsnut (26) versehen ist.

9. Doppelventil nach einem der Ansprüche 1 bis 3, **dadurch gekennzeichnet**, daß zwischen den beiden Gehäusen (2, 2') im Bereich der Anschlußseiten (I', II') mindestens eine willkürlich auslösbare Sperre (28) angeordnet ist.

10. Doppelventil nach einem der Ansprüche 1 bis 9, **dadurch gekennzeichnet**, daß der Ring(A) im Querschnitt stufenförmig ausgebildet ist, wobei der Ringfortsatz(7) des anderen Ringes(B) die erste Stufe untergreift, unter der sich die Ausnehmung(6) befindet, und daß die inneren Umfangsflächen der Ringe(A,B) zueinander und zu den inneren Umfangsflächen der Durchströmkanäle der beiden identischen Ventile(I,II) fluchten

FIG.1

FIG.2

FIG.3

FIG.4

7

FIG.5

FIG.6

FIG.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 159 180 (COURTOT ET AL)<br>* Figuren 1, 2, 12 *<br>– – – | 1 | F 16 L 37/28 |
| A | DE-C-8 359 68 (NEUE ARGUS)<br>* Figur 1 *<br>– – – | 1 | |
| A | US-A-3 382 892 (CERBIN)<br>* Figuren 2, 3 *<br>– – – | 3-5 | |
| A | GB-A-2 162 270 (SA FLOW ENGINEERING)<br>* Figur 2 *<br>– – – | 3,4 | |
| A | DE-C-1 131 472 (THE WEATHERHEAD)<br>* das ganze Dokument *<br>– – – | 1 | |
| A | DE-C-1 054 792 (NEUE ARGUS)<br>* das ganze Dokument *<br>– – – – – | 1 | |

| RECHERCHIERTE SACHGEBIETE (Int. Cl.5) |
|---|
| F 16 L |

Der vorliegende Recherchenbericht wurde für alle Patentansprüche erstellt

| Recherchenort | Abschlußdatum der Recherche | Prüfer |
|---|---|---|
| Berlin | 25 Januar 91 | SCHLABBACH M |